# EUROPEAN PATENT APPLICATION

(11) **EP 4 286 347 A1**
(43) Date of publication of application: **06.12.2023**
(21) Application number: 22745936.9
(22) Date of filing: 26.01.2022
(51) Int. Cl.: C03C 3/091, C03B 32/00, C03C 3/064, C03C 3/089

(54) **PHASE-SEPARATED OPAL GLASS**

(30) Priority: 29.01.2021 JP 2021013699
(71) Applicant: ISUZU GLASS LTD., Izumisano-shi, Osaka 5980048 (JP)
(72) Inventor: YAMAGURO, Takao, Izumisano-shi, Osaka 598-0048 (JP); SUETSUGU, Tatsuya, Izumisano-shi, Osaka 598-0048 (JP); HAJIRI, Yoshitaka, Izumisano-shi, Osaka 598-0048 (JP)
(74) Representative: Maiwald GmbH
(86) International application number: PCT/JP2022/002927
(87) International publication number: WO 2022/163717

(57) **Abstract**

An object of the present invention is to provide an opal glass through which uniform diffused light can be obtained. Specifically, the present invention provides a phase-separated opal glass comprising, in terms of molar concentration (%) on an oxide basis, 15 to 82% of SiO₂, 12 to 75% of B₂O₃, 0 to 7% of Al₂O₃, and 4 to 20% of Li₂O and/or 1 to 14% of Na₂O, a dispersed phase present in the phase-separated opal glass having an average particle size of 0.5 to 2 µm.

## Description

### Technical Field

The present invention relates to a phase-separated opal glass. The present invention further relates to a method for producing the phase-separated opal glass.

### Background Art

Opal glass is generally known to be a fluoride-based crystallized glass. Opal glass, which has a milky white color, is used for decorative purposes (Patent Literature (PTL) 1 to 5). On the other hand, opal glass, which is phase-separated, is also known to be usable as a diffused plate.

### Citation List

### Patent Literature

PTL 1: JP2505685B
PTL 2: JP2505686B
PTL 3: JPH5-073703B
PTL 4: JPH5-073701B
PTL 5: JPS61-141639A

### Summary of Invention

### Technical Problem

As described above, although opal glass can be used as a diffused plate, the directionality of light diffused through opal glass may become a problem. Such directionality becomes a problem, for example, when uniform diffused light with little directionality is to be obtained from a light source, such as LED. Accordingly, an object of the present invention is to provide an opal glass through which uniformly diffused light with little directionality can be obtained.

### Solution to Problem

The present inventors found that when a silicate-based phase-separated opal glass comprises specific components and a dispersed phase present in the opal glass has an average particle size within a specific range, the opal glass can be used as a diffused plate through which uniformly diffused light with little directionality can be obtained. The present invention has been accomplished based on this finding and broadly includes the following embodiments of inventions.

Item 1 A phase-separated opal glass comprising, in terms of molar concentration (%) on an oxide basis,
   15 to 82% of SiO₂,
   12 to 75% of B₂O₃,
   0 to 7% of Al₂O₃, and
   4 to 20% of Li₂O and/or 1 to 14% of Na₂O,
   a dispersed phase present in the phase-separated opal glass having an average particle size of 0.5 to 2 µm.
Item 2 The phase-separated opal glass according to Item 1, further comprising an alkaline earth metal oxide.
Item 3 The phase-separated opal glass according to Item 2, wherein the content of the alkaline earth metal oxide is 5 to 20% in terms of molar concentration (%) on an oxide basis.
Item 4 The phase-separated opal glass according to Item 2 or 3, wherein the alkaline earth metal oxide is at least one member selected from the group consisting of MgO and CaO.
Item 5 The phase-separated opal glass according to any one of Items 1 to 4, wherein light transmitted through the phase-separated opal glass has a variation in transmittance of 3% or less in a wavelength range of 300 to 600 nm.
Item 6 A method for producing a phase-separated opal glass, comprising the following steps (1) and (2):
   (1) step 1 of melting a mixture of
      15 to 82% of SiO₂,
      12 to 75% of B₂O₃,
      0 to 7% of Al₂O₃, and
      4 to 20% of Li₂O and/or 1 to 14% of Na₂O,
      in terms of molar concentration (%) on an oxide basis, and then cooling the melted mixture; and
   (2) step 2 of heating the cooled product obtained in step 1 to 600 to 800°C.
Item 7 The production method according to Item 6, wherein the heating time in step 2 is 5 to 30 hours.
Item 8 A laminate comprising the phase-separated opal glass of any one of Items 1 to 5 and a lens.

### Advantageous Effects of Invention

When used as a diffused plate, the opal glass of the present invention can provide diffused light with less directionality. More specifically, diffused light that is not affected by wavelength selectivity due to Mie scattering can be obtained in a uniform scattering region (about 400 to 600 nm).

### Brief Description of Drawings

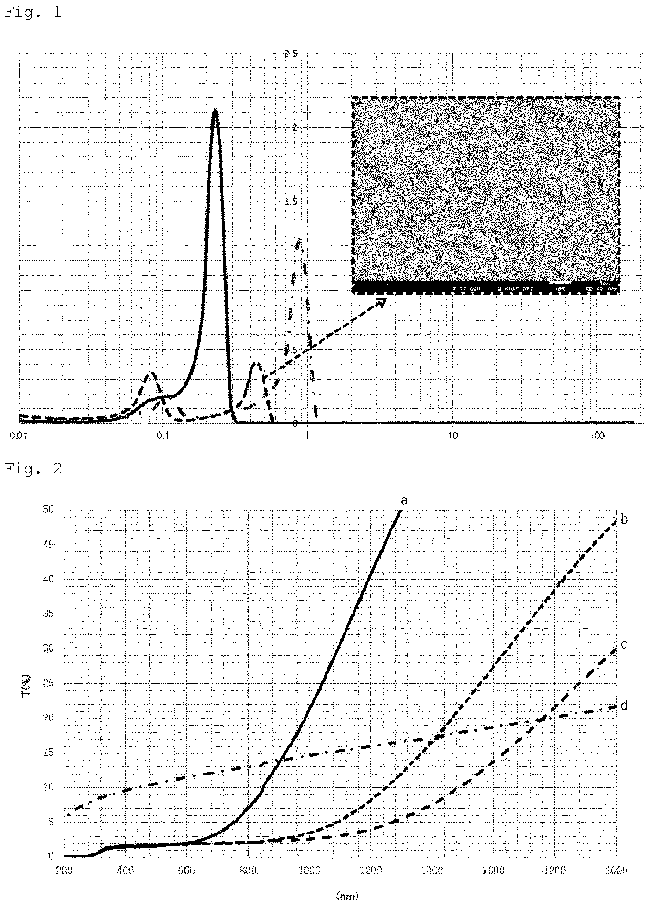

Fig. 1 is a graph showing measurement values of pore distribution (average particle size) of the boric acid phase (dispersed phase) present in opal glass produced in the Examples. The abscissa of the graph shows the logarithm of the particle size (µm). The solid line in the graph shows measurement values of the opal glass produced by performing step 2 at 680°C for 10 hours in the method for producing the phase-separated opal glass of the present invention. The dotted line in the graph shows measurement values of the opal glass produced by performing step 2 at 700°C for 10 hours. The dash-dotted line in the graph shows measurement values of the opal glass produced by performing step 2 at 700°C for 20 hours. The photograph in the graph is an electron microscope image of the opal glass produced by performing step 2 at 700°C for 10 hours.
Fig. 2 shows the results of measuring the transmittance of opal glass produced in the Examples. In the graph, the ordinate shows the transmittance (%), whereas the abscissa shows the wavelength (nm). The solid line (a) in the graph shows the results of measuring the transmittance of the opal glass produced by performing step 2 at 680°C for 10 hours in the method for producing the phase-separated opal glass of the present invention. The dotted line (b) in the graph shows the results of measuring the transmittance of the opal glass produced by performing step 2 at 700°C for 10 hours. The chain line (c) in graph shows the results of measuring the transmittance of the opal glass produced by performing step 2 at 700°C for 20 hours. The dash-dotted line (d) in the graph shows the results of measuring the transmittance through a different diffused plate (#220).

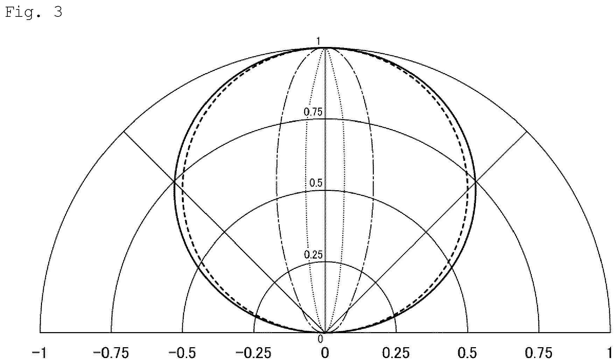

Fig. 3 shows the results of measuring light distribution characteristics of opal glass produced in the Examples. The numerical values in the graph show relative luminosity. The solid line in the graph shows the results of the opal glass produced by performing step 2 at 680°C for 10 hours in the method for producing the phase-separated opal glass of the present invention. The chain line in the graph shows the results of measurement using only a white LED light source as a light source. The dash-dotted line in the graph shows the results of the measurement using a different diffused plate (#220). The dotted line shows theoretical values of COS characteristics, i.e., diffused light with no directionality.

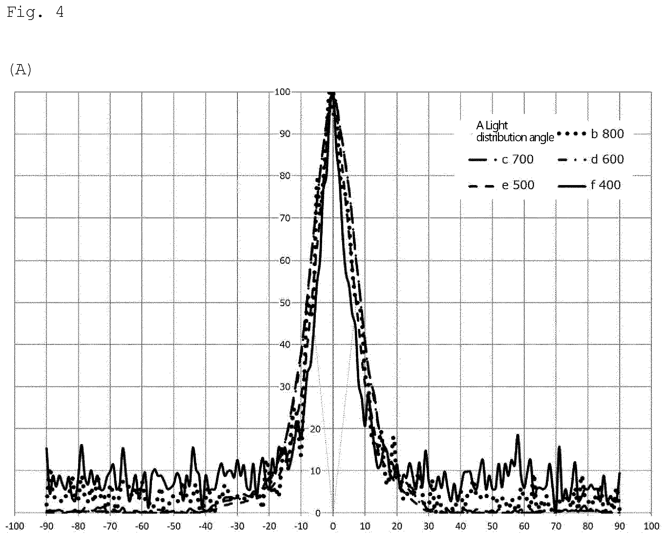

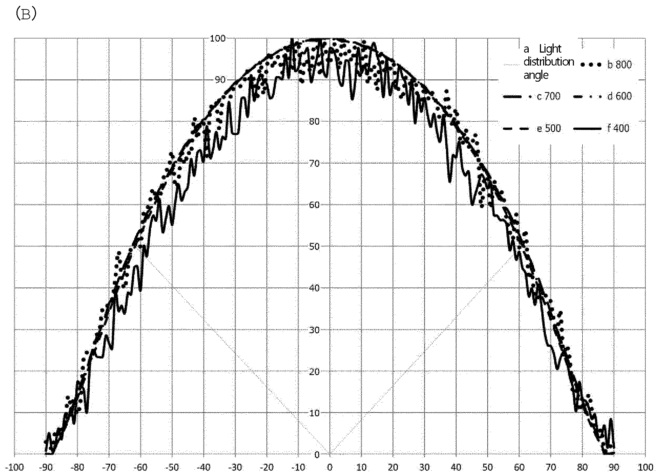

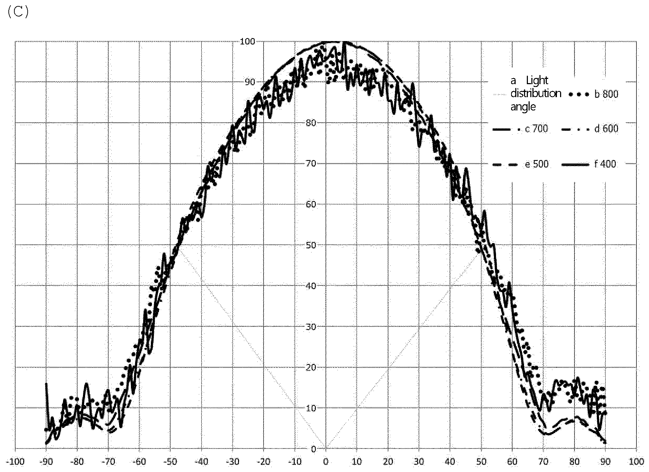

Fig. 4 shows the results of Example 3. Fig. 4(A) is a diagram showing light distribution characteristics of the light source. Fig. 4(B) is a diagram showing light distribution characteristics of the opal glass produced in Example 3. Fig. 4(C) is a diagram showing light distribution characteristics of a laminate formed by bonding the opal glass produced in Example 3 and a plano-convex lens together. In Fig. 4, the dotted line (a) shows the light distribution angle; dots (black circles larger than the dots of the dotted line: b) show measurement values at 800 nm; the dash-dotted line (c) shows measurement values at 700 nm; the double-dotted chain line (d) shows measurement values at 600 nm; the chain line (e) shows measurement values at 500 nm; and the solid line (f) shows measurement values at 400 nm.

### Description of Embodiments

The terms "comprising" or "containing" as used herein encompass the meanings of "consisting essentially of," "consisting of," and "consisting only of."

The numerical range indicated by "A to B" in the present specification means "A or more and B or less."

The phase-separated opal glass and the method for producing the phase-separated opal glass according to the present invention are described below.

The opal glass of the present invention has features such that the opal glass is phase-separated and comprises the following components at the following composition ratio in terms of molar concentration on an oxide basis:
15 to 82% of SiO₂,
12 to 75% of B₂O₃,
0 to 7% of Al₂O₃, and
4 to 20% of Li₂O and/or 1 to 14% of Na₂O; and
a dispersed phase present in the opal glass has an average particle size of 0.5 to 2 µm.

Each component of the opal glass of the present invention is explained below together with the content of the component. In a multi-component glass, elemental components of the glass influence each other to determine unique properties of the glass. Accordingly, it is not necessarily appropriate to discuss the quantitative range of each elemental component according to the properties of each component. However, the reason why the quantitative range of each elemental component contained in the opal glass of the invention is specified is stated below.

SiO₂ is contained as an oxide that forms the framework structure of the opal glass of the present invention. A larger SiO₂ content in the opal glass of the present invention tends to increase the viscosity of the opal glass and tends to reduce the expansion coefficient of the opal glass.

The amount of SiO₂ in the opal glass of the present invention is 15 to 82%, more preferably about 40 to 70%, and still more preferably about 50 to 60%, in terms of molar concentration.

A SiO₂ content of less than 15% may reduce the water resistance of the opal glass of the present invention. A SiO₂ content of more than 82% may reduce phase separation of the opal glass of the present invention.

B₂O₃ is contained as an oxide that forms the dispersed phase of the opal glass of the present invention. An increased B₂O₃ content in the opal glass of the present invention tends to increase the meltability of the opal glass but tends to reduce the weather resistance, and the obtained opal glass tends to have reduced phase separation.

The amount of B₂O₃ in the opal glass of the present invention is 12 to 75%, preferably about 12 to 40%, and more preferably about 12 to 30%, in terms of molar concentration.

A B₂O₃ content of less than 12% may reduce the phase separation of the opal glass of the present invention. A B₂O₃ content of more than 75% may reduce the weather resistance of the opal glass of the present invention.

Al₂O₃ is contained as an oxide that forms the skeletal phase of the opal glass of the present invention. An increased Al₂O₃ content in the opal glass of the present invention tends to reduce the phase separation and meltability of the opal glass but tends to increase the weather resistance and the expansion coefficient.

The amount of Al₂O₃ in the opal glass of the present invention is 0 to 7%, preferably 3 to 6%, and more preferably 4 to 6%, in terms of molar concentration.

An Al₂O₃ content of more than 7% may reduce the phase separation of the opal glass of the present invention. 0% means that no Al₂O₃ is present in the opal glass of the present invention.

Li₂O is contained as an oxide that forms the dispersed phase of the opal glass. An increased Li₂O content in the opal glass of the present invention tends to reduce the phase separation of the opal glass. However, when at least one other alkali metal oxide or alkaline earth metal oxide is used with Li₂O, the reduction in phase separation can be suppressed. An increased Li₂O content in the opal glass of the present invention tends to increase the meltability of the opal glass but tends to reduce the weather resistance.

The amount of Li₂O in the opal glass of the present invention is 4 to 20%, preferably 5 to 15%, and more preferably 7 to 12%, in terms of molar concentration.

A Li₂O content of less than 4% may reduce the phase separation of the opal glass of the present invention. A Li₂O content of more than 20% may reduce the weather resistance of the opal glass of the present invention.

Na₂O is contained as an oxide that forms the dispersed phase of the opal glass of the present invention. An increased Na₂O content in the opal glass of the present invention tends to increase the meltability of the opal glass but tends to reduce the weather resistance of the opal glass.

The amount of Na₂O in the opal glass is 1 to 14%, preferably 2 to 10%, and more preferably about 2 to 7%, in terms of molar concentration.

A Na₂O content of less than 1% may reduce the meltability of the opal glass of the present invention. A Na₂O content of more than 14% may reduce the weather resistance of the opal glass of the present invention. The relationship between Li₂O and Na₂O is "and/or." The opal glass may contain either Li₂O or Na₂O, or both.

The opal glass of the present invention is phase-separated. Specifically, the opal glass of the present invention has a feature such that the dispersed phase present in the opal glass has an average particle size of 0.5 to 2 um. The average particle size of the dispersed phase is preferably 0.7 to 1.5 um. This average particle diameter can be measured by a known method. Specifically, such a usable known method is, for example, a method in which an opal glass that is phase-separated as described below is treated with an acid at a high temperature to elute a dispersed phase mainly composed of boric acid to form a pumice-like porous glass, and pores of the glass are measured by the pore distribution measurement method described in the Examples below; or a measurement method similar thereto using a measuring instrument equivalent to that used in the method described in the Examples.

When the average particle size of the dispersed phase present in the opal glass of the present invention is set to 0.5 to 2 pm, the directionality of the diffused light (of visible light) transmitted through the opal glass can be reduced and uniform diffused light can be obtained. More specifically, diffused light that is not affected by wavelength selectivity due to Mie scatterin can be obtained in a uniform scattering region (about 300 to 600 nm) g.

The uniform scattering region means, for example, that light in a wavelength range of 300 to 600 nm transmitted through the opal glass of the present invention has a variation in transmittance of 3% or less, preferably 1% or less, and more preferably 0.1% or less, as determined by the measurement method described in the Examples.

In a preferred embodiment of the opal glass of the present invention, for example, light in a longer wavelength range of 300 to 700 nm transmitted through the opal glass of the present invention has the same level of variation in transmittance as described above for the light in a wavelength range of 300 to 600 nm transmitted through the opal glass of the present invention. More preferably, the same applies to light in a wavelength range of 300 to 800 nm, still more preferably 300 to 900 nm, and in particular, most preferably 300 to 1000 nm.

The phrase "reduce the phase separation" as used herein carries the same meaning as reduction in the average particle size of the dispersed phase.

It is known that in general, when the amount of alkali metal oxide, such as LiO and Na₂O, present in a glass material falls outside a predetermined concentration range, the phase separation in the glass material is reduced (Phase Separation in Glass, October 1, 1984, Elsevier Science Ltd., see pp. 131 to 138) .

The opal glass of the present invention can further contain one or more alkaline earth metal oxides as long as the effects of the present invention are not impaired. Such an alkaline earth oxide is contained as an oxide that forms the dispersed phase of the opal glass of the present invention. An increased alkaline earth metal oxide content in the opal glass of the present invention tends to enhance the meltability of the opal glass.

The specific alkaline earth metal oxide that can be contained in the opal glass of the present invention is not particularly limited as long as the effects of the present invention are not impaired. Examples of alkaline earth metal oxides in preferred embodiments include MgO and/or CaO.

The amount of the specific alkaline earth oxide in the opal glass of the present invention is not particularly limited as long as the effects of the present invention are not impaired. For example, the amount of the alkaline earth oxide is preferably 5 to 20%, more preferably about 6 to 15%, and even more preferably about 7 to 14%, in terms of molar concentration.

The opal glass of the present invention can contain components other that those mentioned above as long as the effects of the present invention are provided.

The phase separated opal glass is produced through the following steps (1) and (2).

### Step (1)

A step of melting a mixture of
15 to 82% of SiO₂,
12 to 75% of B₂O₃,
0 to 7% of Al₂O₃, and
4 to 20% of Li₂O and/or 1 to 14% of Na₂O
in terms of molar concentration % on an oxide basis, and then cooling the melted mixture.

### Step (2)

A step of heating the cooled product obtained in step 1 to 600 to 800°C.

The phase-separated opal glass produced in this manner can contain a dispersed phase having an average particle size of 0.5 to 2 µm. When this opal glass is used as a diffused plate, the directionality of light diffused through the diffused plate can be reduced. More specifically, diffused light that is not affected by wavelength selectivity due to Mie scattering can be obtained in a uniform scattering region (about 400 to 600 nm).

### Step 1

The specific melting process in step 1 can be performed by any known means as long as the phase-separated opal glass of the present invention can be produced. For example, the melting method in which prescribed amounts of starting materials for the components are placed into a quartz crucible and subjected to a heat treatment can be used.

The time of performing the heat treatment is not particularly limited as long as the contents of the quartz crucible are sufficiently vitrified and the effects of the present invention are provided. Specifically, the heat treatment time is about 2 to 10 hours, and more preferably about 3 to 5 hours. The heat treatment temperature during the vitrification is not particularly limited and can be, for example, about 900 to 1600°C, and more preferably about 1100 to 1300°C. After completion of the vitrification, for example, a stirring process, a clarification process, and a molding process can be used as appropriate as long as the effects of the invention are achieved.

The cooling (slow cooling) process provided after the above process can be performed by any known means as long as the phase-separated opal glass of the present invention can be produced. Examples of usable methods include a method of natural cooling after molding, a method of cooling from a temperature around the transition point at a temperature reduction rate of 0.5 to 10°C/minute, and the like.

### Step 2

In step 2, the temperature at which the cooled product obtained in step 1 is heated is 600 to 800°C, preferably about 650 to 750°C, more preferably about 660°C to 730°C, and most preferably about 670 to 710°C. When a temperature within such a range is used, diffused light obtained by being transmitted through the phase-separated opal glass of the present invention can be obtained as light that is not affected by wavelength selectivity due to Mie scattering in a uniform scattering region (about 300 to 600 nm).

A temperature of 600°C or higher can provide more uniform scattered light without causing influence of wavelength selectivity, and a heating time of 800°C or less can provide a strong glass.

The heating time in step 2 is not particularly limited as long as the effects of the present invention are provided. Specifically, the heating time is, for example, 5 to 30 hours, and preferably about 8 to 20 hours. When the heating temperature is set within such a range, diffused light transmitted through the phase-separated opal glass of the present invention can be obtained as light that is not affected by wavelength selectivity due to Mie scattering in a uniform scattering region (300 to 600 nm) .

A heat treatment time of 5 hours or more can provide more uniformly scattered light without causing influence of wavelength selectivity. A heat treatment time of 30 hours or less can provide a robust glass.

The method for producing the phase-separation opal glass of the present invention can also include slow cooling of the heated material and polishing after step 2.

The phase-separated opal glass of the present invention can form a laminate together with a lens. Specifically, the laminate of the present invention comprises the phase-separated opal glass of the present invention and a lens. The phase-separated opal glass of the present invention and the lens that form the laminate of the present invention can be bonded by a known means to form the laminate of the present invention. For example, bonding via an adhesive can be used.

The lens of the laminate of the present invention is not particularly limited, and usable lenses include a wide variety of known lenses. The lens preferably has optical characteristics. For example, since the phase-separated opal glass of the laminate of the present invention has the ability to diffuse incident light, a lens capable of adjusting the degree of the light diffusion is preferably used. Examples of such lenses include convex lenses, and more preferably plano-convex lenses that do not affect the surface in contact with the phase-separated opal glass of the present invention. Examples of lenses preferably used in the laminate of the present invention include Fresnel lenses.

### Examples

Examples are given below to describe the present invention in more detail. However, the present invention is not limited to the Examples below.

A quartz crucible was prepared and placed in an electric furnace heated to 1000 to 1500°C. Subsequently, to obtain compositions shown in Tables 1 and 2 below, the starting materials for the components were mixed, and the mixture of the starting materials was placed into the quartz crucible. The numerical values in the following tables show the amount of each oxide in terms of mol%, based on the total amount of the oxides in the opal glass being defined as 100 mol%. The "evaluation" refers to the evaluation of phase separation described below.

After the temperature was raised, the mixture was subjected to a stirring/clarification process and molded/slowly cooled. After the temperature sufficiently decreased, the mixture was again subjected to a heat treatment at a temperature of 650 to 750°C for 10 to 20 hours (hereinafter referred to as "reheating process"). The obtained opal glass was polished, if necessary.

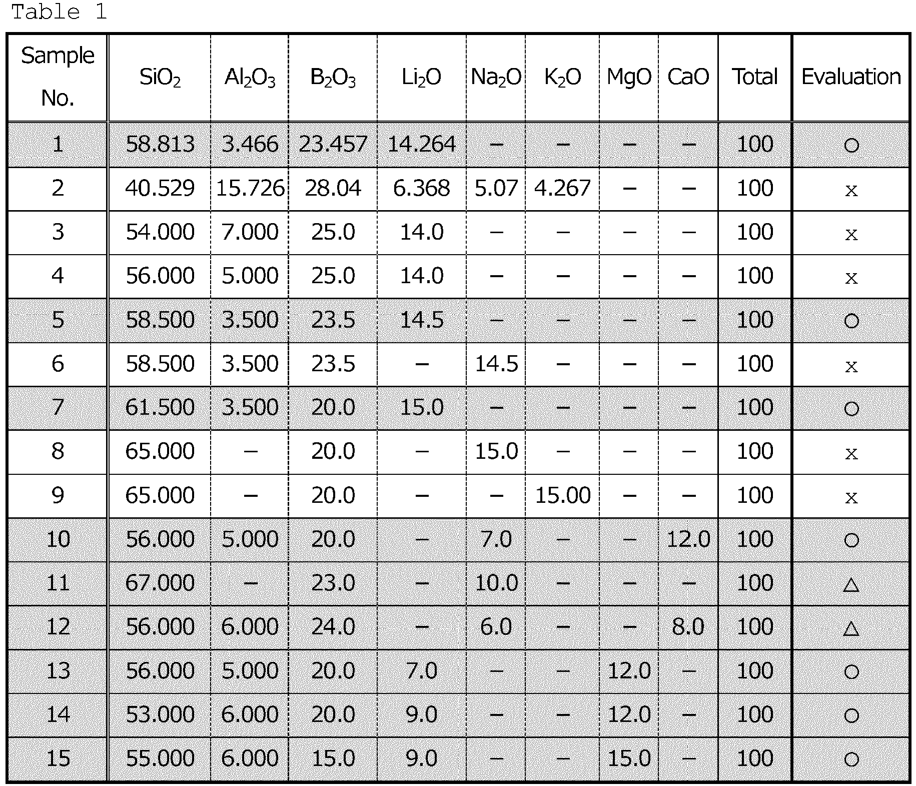

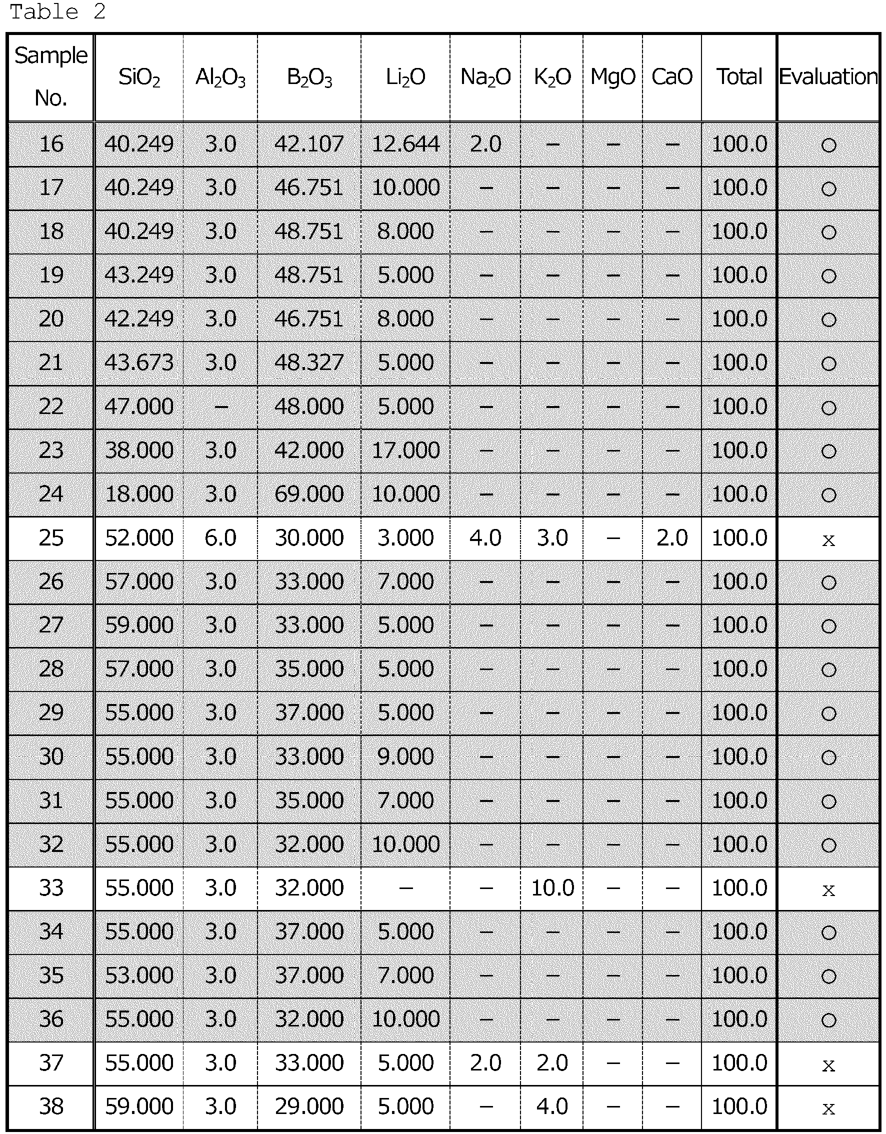

### Example 1: Pore Distribution Measurement Experiment

The pore distribution of each of the opal glass samples produced in this manner was measured. The numerical value obtained thereby corresponds to the average particle size of the dispersed phase of the phase-separated opal glass material as defined in the present invention. Specifically, the measurement was performed by the following method.

Each of the obtained opal glass samples was immersed in a 1N sulfuric acid solution at 95°C for 12 hours to elute the boric acid phase of the phase-separated opal glass, and then washed/dried. The resulting product was subjected to pore distribution measurement by the mercury injection method using a pore distribution analyzer (AutoPore V9620: produced by Shimadzu-Micromeritics) according to the manual of the analyzer.

Specifically, in the mercury injection method, about 0.4 to 0.5 g of each sample was broken into pieces with a size small enough to fit into a standard 5-cc large-piece cell and measured at an initial pressure of 7 kPa (about 1 psia: corresponding to a pore diameter of about 180 µm). As mercury parameters, the contact angle was set at 130.0 degrees, and the surface tension was set at 485.0 dynes/cm.

Fig. 1 shows the pore distribution measurement results of opal glass samples obtained by subjecting sample No. 30 shown in Table 2 above to the reheating process at 680°C for 10 hours, 700°C for 10 hours, or 700°C for 20 hours.

The results of Fig. 1 clearly show that the higher the temperature and the longer the treatment time in the reheating process of step 2 in the opal glass production method of the present invention, the larger the pore size of the boric acid phase (dispersed phase) contained in the obtained opal glass.

### Example 2: Evaluation of Uniform Scattering Region (Transmitted Light Measurement Experiment)

Next, three samples prepared by performing the reheating process under different conditions as described above were set 50 mm away from an integrating sphere light source, and the transmittance % of diffused light through each opal glass sample was measured using a U-4100 spectrophotometer (produced by Hitachi High-Technologies Corporation). Fig. 2 shows the measurement results.

The results of Fig. 2 clearly show that when light is transmitted through the opal glass produced by performing the reheating process at 680°C for 10 hours (solid line: a), a uniform scattering region that is not affected by wavelength selectivity due to Mie scattering is around 300 to 600 nm; when light is transmitted through the opal glass produced by performing the reheating process at 700°C for 10 hours (dotted line: b), the uniform scattering region is around 300 to 900 nm; and when light is transmitted through the opal glass produced by performing the reheating process at 700°C for 20 hours (chain line: c), the uniform scattering region is around 300 to 1000 nm.

Further, another diffused plate (#220) was also measured for transmittance of diffused light in the same manner as these opal glass samples. #220 refers to a glass obtained by treating the surface of simple quartz glass with sand with a grain size of 200 mesh to form a sanded surface and thereby impart a diffusing function. As is clear from Fig. 2, when #220 (dash-dotted line: d) was used, no uniform scattering region could be confirmed in the wavelength range of 200 to 1200 nm.

### Example 3: Experiment on Light Distribution Characteristics

Next, light distribution characteristics of diffused light of the opal glass produced by performing the reheating process at 700°C for 10 hours were measured with an IMS-5000 (produced by Asahi Spectra Co., Ltd.). The light source was a bullet-type white LED. The smallest sample for measurement was set approximately 2 mm away from the light source. Fig. 3 shows the results. Fig. 3 also shows the results of comparative experiments using the light source alone or using a different diffused plate (#220), as well as theoretical values of COS characteristics, i.e., diffused light with no directionality.

The results shown in Fig. 3 clearly indicate that unlike the case of using the light source plate alone or using the different diffused plate (#220), the diffused light of the opal glass produced by performing the reheating process at 700°C for 10 hours showed measurement results close to the theoretical values of COS characteristics. Accordingly, it became clear that diffused light of the opal glass produced by performing the reheating process at 700°C for 10 hours has little directionality and is uniform.

The above results are shown in the "Evaluation" columns of Tables 1 and 2, in which the symbol "o" means that the average particle size of the dispersed phase measured in Example 1 above was 0.5 to 2 um and the upper limit of the uniform scattering region determined in Example 2 was 700 nm or more; the symbol "Δ" means that the average particle size of the dispersed phase measured in Example 1 was 0.5 to 2 um and the range of the uniform scattering region determined in Example 2 is within the range of 300 to 700 nm; and the symbol "x" means that the average particle size of the dispersed phase measured in Example 1 does not fall within the range of 0.5 to 2 um, or the upper limit of the uniform scattering region determined in Example 2 is within the range of 300 nm or less.

As shown in the above Examples, the opal glass of the present invention, for example, sample No. 30, contains a dispersed phase having an average particle size in the range of 0.5 to 2 µm (Example 1), and can provide diffused light whose upper limit of the uniform scattering region can be determined to be 700 nm or more (Example 2) and that has light distribution characteristics with little directionality (Example 3).

Further, it became clear that the higher the temperature of the reheating process and the longer the heat treatment temperature, the larger the average particle size of the dispersed phase in the range of 0.5 to 2 um, and the wider the wavelength range that can be determined as the uniform scattering region of diffused light (Example 2).

In the solid line of the graph shown in Fig. 2, a sharp increase in transmitted light is observed in a wavelength range of 600 nm or higher. This indicates that the diffusion effect of the opal glass on light transmitted through the opal glass decreased and the light directly transmitted through the opal glass increased. Accordingly, the wider the wavelength range of the uniform distribution region of diffused light transmitted through the opal glass, the less directional the diffused light, and the better effect the opal glass can provide as a diffused plate.

### Example 4: Application Example of Laminate with Another Lens

The components of the composition of Sample No. 15 shown in Table 1 above were melted in the same manner as in Example 1 above and molded/slowly cooled and reheated at 690°C for 10 hours to produce an opal glass. This opal glass was bonded to the plane side of a plano-convex lens (R12x9t (glass material S-LAM60), produced Isuzu Corporation) with an adhesive (Photobond, produced by Sunrise Corporation) to prepare a laminate.

The light distribution characteristics of the laminate produced above were measured in the same manner as in Example 3. At the same time, the light distribution characteristics of the light source (white LED) alone and the light distribution characteristics of the opal glass alone, without being bonded to a plano-convex lens, were also measured. Fig. 4 shows the results.

The results clearly show that the light distribution angle of the light source shown in Fig. 4(A) is 13.9°, which was increased to 122.38° by the diffusion effect of the opal glass as shown in Fig. 4(B). On the other hand, the convex lens, which has a light convergence effect, could adjust the light diffusion effect of the opal glass shown in Fig. 4(B). Fig. 4(C), which shows light distribution characteristics of the laminate obtained by bonding the opal glass and the plano-convex lens together, shows a light distribution angle of 99.26°, which was found to be smaller than the light distribution angle of the opal glass of 122.38° shown in Fig. 4(B).

It is clear from the above results that when the opal glass produced in the Examples is combined with another lens to form a laminate, the laminate can be produced as a diffused plate capable of providing the desired light distribution angle.

## Claims

1. A phase-separated opal glass comprising, in terms of molar concentration (%) on an oxide basis,
15 to 82% of SiO₂,
12 to 75% of B₂O₃,
0 to 7% of Al₂O₃, and
4 to 20% of Li₂O and/or 1 to 14% of Na₂O,
a dispersed phase present in the phase-separated opal glass having an average particle size of 0.5 to 2 µm.

2. The phase-separated opal glass according to claim 1, further comprising an alkaline earth metal oxide.

3. The phase-separated opal glass according to claim 2, wherein the content of the alkaline earth metal oxide is 5 to 20% in terms of molar concentration (%) on an oxide basis.

4. The phase-separated opal glass according to claim 2 or 3, wherein the alkaline earth metal oxide is at least one member selected from the group consisting of MgO and CaO.

5. The phase-separated opal glass according to any one of claims 1 to 4, wherein light transmitted through the phase-separated opal glass has a variation in transmittance of 3% or less in a wavelength range of 300 to 600 nm.

6. A method for producing a phase-separated opal glass, comprising the following steps (1) and (2):
(1) step 1 of melting a mixture of
15 to 82% of SiO₂,
12 to 75% of B₂O₃,
0 to 7% of Al₂O₃, and
4 to 20% of Li₂O and/or 1 to 14% of Na₂O, in terms of molar concentration (%) on an oxide basis, and then cooling the melted mixture; and
(2) step 2 of heating the cooled product obtained in step 1 to 600 to 800°C.

7. The production method according to claim 6, wherein the heating time in step 2 is 5 to 30 hours.

8. A laminate comprising the phase-separated opal glass of any one of claims 1 to 5 and a lens.
